# EUROPEAN PATENT APPLICATION

(11) **EP 4 737 777 A1**
(43) Date of publication of application: **06.05.2026**
(21) Application number: 24831809.9
(22) Date of filing: 20.06.2024
(51) Int. Cl.: F16K 27/00

(54) **SELECTOR VALVE BLOCK ASSEMBLY AND AIR SUPPLY/EXHAUST BLOCK USED FOR SAME**

(30) Priority: 29.06.2023 JP 2023107458
(71) Applicant: SMC Corporation, Tokyo 104-0031 (JP)
(72) Inventor: MURAKAMI Takashi, Tsukubamirai-shi, Ibaraki 300-2493 (JP)
(74) Representative: Keil & Schaafhausen Patentanwälte PartGmbB
(86) International application number: PCT/JP2024/022323
(87) International publication number: WO 2025/004947

(57) **Abstract**

[Object] To provide a selector valve block assembly allowing mixed mounting of various types of selector valve blocks onto an air supply/exhaust block and to provide an air supply/exhaust block.

[Solution] In a selector valve block assembly 1, first and second selector valve blocks 60A and 60B having output ports 64a and 64b and a first air supply/exhaust block 10 having air supply and air exhaust ports 12 and 13 are coupled to one another. The first air supply/exhaust block has first air supply and first air exhaust openings in one side surface and has second air supply and second air exhaust openings in the other side surface. The first and second air supply openings and the air supply port are communicated, and the first and second air exhaust openings and the air exhaust port are communicated. The centers of the openings are disposed on different axial lines. When the first selector valve block is coupled to one side surface of the first air supply/exhaust block, air supply and air exhaust flow passages are coupled to the first air supply and second air exhaust openings, and, when the second selector valve block is coupled to the other side surface of the first air supply/exhaust block, air supply and air exhaust flow passages are coupled to the second air supply and second air exhaust openings.

## Description

### Technical Field

The present invention relates to a selector valve block assembly configured by coupling, in a row in a width direction, multiple selector valve blocks and an air supply/exhaust block configured to supply and exhaust air for and from the blocks and relates to the air supply/exhaust block used for the selector valve block assembly.

### Background Art

For example, PTL 1 discloses a selector valve block assembly configured by coupling multiple selector valve blocks and an air supply/exhaust block in a row in a width direction. In the selector valve block assembly, the multiple selector valve blocks and the air supply/exhaust block are coupled to one another in a row in the width direction with side surfaces abutting on each other.

A pair of side surfaces of the air supply/exhaust block facing away from each other in the width direction have an air supply opening for supplying air to the selector valve block and an air exhaust opening for introducing the air exhausted from the multiple selector valve blocks. The air supply openings have respective centers disposed on the same axial line extending along the width direction and have the same shape. In addition, the air exhaust openings have respective centers disposed on the same axial line extending along the width direction and have the same shape.

When the selector valve block varies in, for example, capacity (flow-quantity size), the sizes and/or the positions of an air supply opening for the air supplied from the air supply/exhaust block and an air exhaust opening for the air exhausted into the air supply/exhaust block vary. Thus, mixed mounting of various types of selector valve blocks onto one air supply/exhaust block is difficult.

### Citation List

### Patent Literature

PTL 1: Japanese Unexamined Patent Application Publication No. 2001-355755

### Summary of Invention

### Technical Problem

Thus, a technical challenge of the present invention is to provide a selector valve block assembly allowing mixed mounting of various types of selector valve blocks onto one air supply/exhaust block and to provide an air supply/exhaust block used for the selector valve block assembly.

### Solution to Problem

In order to address the above-described challenge, a selector valve block assembly according to the present invention is a selector valve block assembly in which multiple selector valve blocks having an output port and an air supply/exhaust block having an air supply port and an air exhaust port are coupled to one another in a row along a width direction with side surfaces abutting on each other, the selector valve block assembly including a first end and a second end at both ends in the width direction, wherein the air supply/exhaust block includes a body having a first air supply opening for discharging air and a first air exhaust opening for exhausting air in a side surface, on the first end side, of a pair of side surfaces facing away from each other in the width direction, and having a second air supply opening and a second air exhaust opening in a side surface of the pair of the side surfaces on the second end side, the first air supply opening, the second air supply opening, and the air supply port are communicated with one another through an air supply communication flow passage, the first air exhaust opening, the second air exhaust opening, and the air exhaust port are communicated with one another through an air exhaust communication flow passage, the first and second air supply openings have respective centers disposed on axial lines that extend along the width direction and are mutually different, the first and second air exhaust openings have respective centers disposed on axial lines that extend along the width direction and are mutually different, the multiple selector valve blocks are constituted by multiple selector valve blocks selected from first and second selector valve blocks including an air supply flow passage and an air exhaust flow passage that pass through between both side surfaces facing away from each other in the width direction, and allowing the air supply flow passage and the air exhaust flow passage to be selectively communicated with the output port, when the first selector valve block is coupled to the side surface of the air supply/exhaust block on the first end side, the air supply flow passage and the air exhaust flow passage of the first selector valve block are capable of being coupled to the first air supply opening and the first air exhaust opening of the air supply/exhaust block, and, when the second selector valve block is coupled to the side surface of the air supply/exhaust block on the second end side, the air supply flow passage and the air exhaust flow passage of the second selector valve block are capable of being coupled to the second air supply opening and the second air exhaust opening of the air supply/exhaust block.

In this case, it is preferable that the first air supply opening and the first air exhaust opening of the air supply/exhaust block be spaced from each other by a first distance in the side surface on the first end side, that the second air supply opening and the second air exhaust opening be spaced from each other, in the side surface on the second end side, by a second distance that is different from the first distance, that an opening area of the first air supply opening differ from an opening area of the second air supply opening, and that an opening area of the first air exhaust opening differ from an opening area of the second air exhaust opening.

It is also preferable that the first and second selector valve blocks be pilot type selector valves, that the air supply/exhaust block be selectively switchable between an external mode of supplying externally introduced pilot air to the first and/or second selector valve block and an internal mode of supplying, as pilot air, a portion of air introduced from the air supply port, to the first and/or second selector valve block, that the air supply/exhaust block include a first selection member mounted on the body in the external mode, a second selection member mounted on the body in the internal mode, and an attachment surface formed in the body and selectively mounted with the selection members, that the pair of the side surfaces of the body have first and second pilot supply openings for supplying pilot air to the first and/or second selector valve block and first and second pilot air exhaust openings for introducing pilot air exhausted from the first and/or second selector valve block, that the attachment surface have an air supply communication port communicated with the air supply port, a pilot supply communication port communicated with the first and second pilot supply openings, and a pilot air exhaust communication port communicated with the first and second pilot air exhaust openings, that the first selection member have a pilot supply inlet for supplying pilot air and a pilot exhaust outlet for exhausting pilot air and be configured so as to allow the pilot supply inlet to communicate with the pilot supply communication port, allow the pilot exhaust outlet to communicate with the pilot air exhaust communication port, and further close the air supply communication port when mounted on the attachment surface, that the second selection member be configured so as to allow the air supply communication port to communicate with the pilot supply communication port and further close the pilot air exhaust communication port when mounted on the attachment surface, that, by configuring the first selection member and the second selection member as above, in the external mode, pilot air supplied from the pilot supply inlet be supplied to the first and/or second selector valve block, and pilot air that is exhausted from the selector valve block supplied with the pilot air be exhausted from the pilot exhaust outlet, and that, in the internal mode, pilot air from the air supply port be supplied to the first and/or second selector valve block, and pilot air that is exhausted from the first and/or second selector valve block supplied with the pilot air be exhausted through the air exhaust flow passage of the selector valve block.

It is also preferable that the first and second pilot supply openings have respective centers disposed on axial lines that extend along the width direction and are mutually different, that the first and second pilot air exhaust openings have respective centers disposed on axial lines that extend along the width direction and are mutually different, that the first pilot supply opening and the first pilot air exhaust opening be spaced from each other by a third distance in the side surface on the first end side, and that the second pilot supply opening and the second pilot air exhaust opening be spaced from each other, in the side surface on the second end side, by a fourth distance that is different from the third distance.

It is also preferable that the first and second selector valve blocks each include a selector valve-pilot supply flow passage and a selector valve-pilot air exhaust flow passage that pass through between both the side surfaces facing away from each other in the width direction, that, when the first selector valve block is coupled to the side surface of the air supply/exhaust block on the first end side, the selector valve-pilot supply flow passage and the selector valve-pilot air exhaust flow passage of the first selector valve block be coupled to the first pilot supply opening and the first pilot air exhaust opening of the air supply/exhaust block, and that, when the second selector valve block is coupled to the side surface of the air supply/exhaust block on the second end side, the selector valve-pilot supply flow passage and the selector valve-pilot air exhaust flow passage of the second selector valve block be coupled to the second pilot supply opening and the second pilot air exhaust opening of the air supply/exhaust block.

An air supply/exhaust block according to the present invention is used for the selector valve block assembly.

### Advantageous Effects of Invention

As described above, according to the present invention, there can be provided the selector valve block assembly allowing mixed mounting of various types of selector valve blocks onto one air supply/exhaust block and the air supply/exhaust block used for the selector valve block assembly.

### Brief Description of Drawings

[Fig. 1] Fig. 1 is a front side perspective view of a selector valve block assembly according to an embodiment of the present invention.
[Fig. 2] Fig. 2 is a left side surface-side perspective view of an air supply/exhaust block.
[Fig. 3] Fig. 3 is a right side surface-side perspective view of the air supply/exhaust block.
[Fig. 4] Fig. 4 is a right side view of the air supply/exhaust block.
[Fig. 5] Fig. 5 is a left side view of the air supply/exhaust block.
[Fig. 6] Fig. 6 is a plan view of the air supply/exhaust block.
[Fig. 7] Fig. 7 illustrates a first selection member, that is, Fig. 7(a) is a perspective view of the first selection member when viewed from the upper surface side, and Fig. 7(b) is a perspective view of the first selection member when viewed from the bottom surface side.
[Fig. 8] Fig. 8(a) is a bottom view of the first selection member, and Fig. 8(b) is a sectional view of a portion corresponding to an VIII-VIII arrow view in Fig. 8(a).
[Fig. 9] Fig. 9 illustrates a second selection member, that is, Fig. 9(a) is a perspective view of the second selection member when viewed from the upper surface side, and Fig. 9(b) is a perspective view of the second selection member when viewed from the bottom surface side.
[Fig. 10] Fig. 10(a) is a bottom view of the second selection member, and Fig. 10(b) is a sectional view of a portion corresponding to a X-X arrow view in Fig. 10(a).
[Fig. 11] Fig. 11 is a plan view of the air supply/exhaust block for illustrating the flows of the air flowing inside the air supply/exhaust block in an external pilot mode.
[Fig. 12] Fig. 12 is a plan view of the air supply/exhaust block for illustrating the flows of the air flowing inside the air supply/exhaust block in an internal pilot mode.
[Fig. 13] Fig. 13 is a perspective view of a first selector valve block.
[Fig. 14] Fig. 14 is a left side view of the first selector valve block.
[Fig. 15] Fig. 15 is a right side view of the first selector valve block.
[Fig. 16] Fig. 16 is a sectional view of the first selector valve block, corresponding to a XVI-XVI arrow view in Fig. 13.
[Fig. 17] Fig. 17 is a sectional view according to a modification of the first selector valve block.
[Fig. 18] Fig. 18 is a perspective view of a second selector valve block.
[Fig. 19] Fig. 19 is a left side view of the second selector valve block.
[Fig. 20] Fig. 20 is a right side view of the second selector valve block.
[Fig. 21] Fig. 21 is a perspective view illustrating a modification of the selector valve block assembly.
[Fig. 22] Fig. 22 is a perspective view illustrating a modification of the selector valve block.

### Description of Embodiments

Hereinafter, a selector valve block assembly and an air supply/exhaust block, used for the selector valve block assembly, according to the present invention will be described. Note that, in the present embodiment, since the air supply/exhaust block constitutes a portion of the selector valve block assembly, the air supply/exhaust block will be described in the description of the selector valve block assembly.

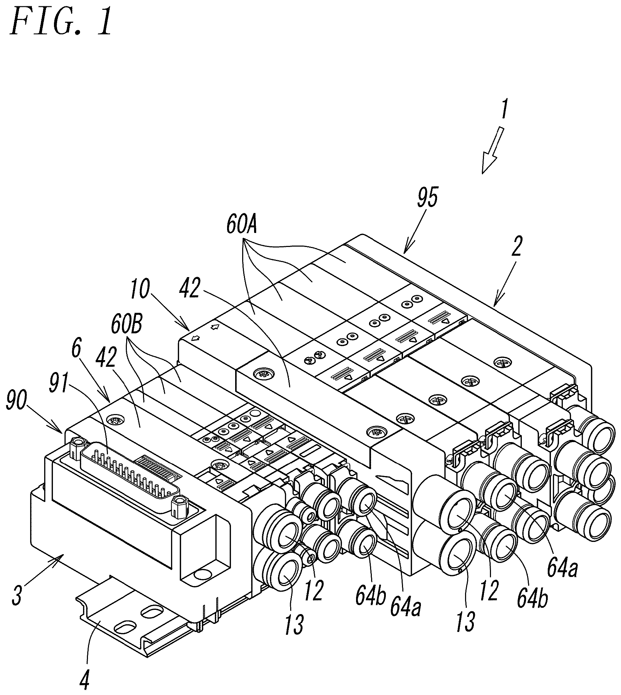

As illustrated in Fig. 1, in a selector valve block assembly 1, a first air supply/exhaust block 10, a second air supply/exhaust block 6, multiple pilot type first selector valve blocks 60A, multiple pilot type second selector valve blocks 60B, a first end block 90, and a second end block 95 are arranged in a width direction and integrated. The selector valve block assembly 1 includes a first end 2 and a second end 3 at both ends in the width direction, and, while mounted on a rail 4, the devices constituting the selector valve block assembly 1 are coupled to one another so as to be brought into contact with and separated from one another with mutually facing side surfaces in the width direction abutting on each other.

The selector valve block assembly 1 of the present embodiment is configured so that air and pilot air are supplied to and exhausted from the multiple first selector valve blocks 60A in a collective manner through an air supply flow passage and an air exhaust flow passage that extend from the first air supply/exhaust block 10 and inside the first air supply/exhaust block 10 and the multiple first selector valve blocks 60A. Moreover, the selector valve block assembly 1 is configured so that air and pilot air are supplied to and exhausted from the multiple second selector valve blocks 60B in a collective manner through an air supply flow passage and an exhaust flow passage and a pilot supply flow passage and a pilot air exhaust flow passage that extend from the second air supply/exhaust block 6 and inside the second air supply/exhaust block 6 and the multiple second selector valve blocks 60B. The details of the air supply flow passages and the exhaust flow passages, and the pilot supply flow passage and the pilot air exhaust flow passage will be described later.

The first and second selector valve blocks 60A and 60B share the common feature of being a pilot type selector valve with a block shape but are mutually different in capacity (flow-quantity size). The first selector valve block 60A is larger in capacity than the second selector valve block 60B. The first air supply/exhaust block 10 allows mixed mounting of the first and second selector valve blocks 60A and 60B different in capacity thereonto whereas the second air supply/exhaust block 6 allows coupling of only the second selector valve block 60B thereto. The first end block 90 is provided with a connector 91 on an upper surface and configured to supply electric power and electrical signals to solenoids 76a1 and 76b1 provided in the first and second selector valve blocks 60A and 60B. The second end block 95 closes openings of the first selector valve block 60A on the first end 2 side.

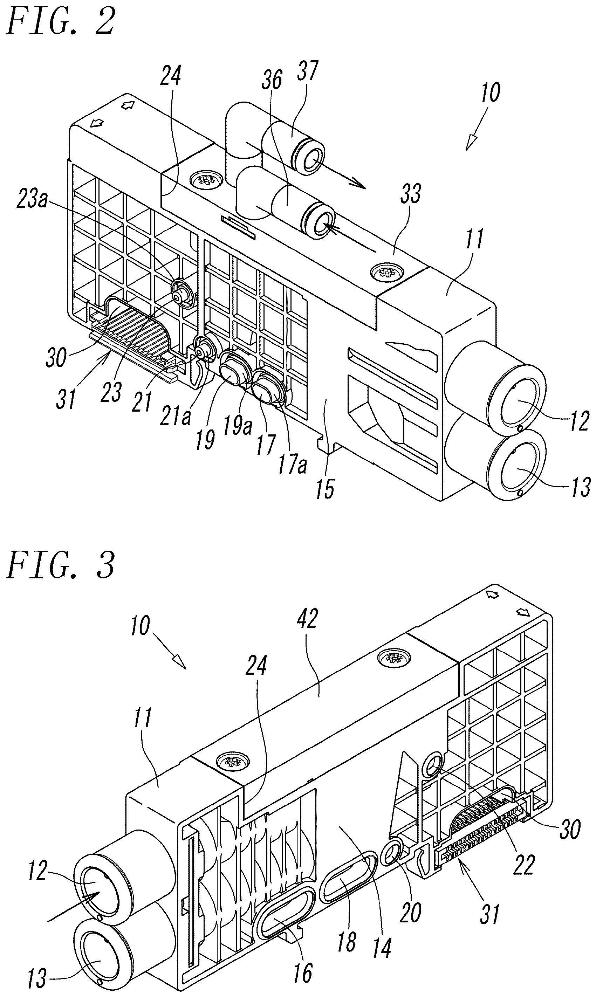

Next, the devices constituting the selector valve block assembly 1 will be described. First, the first air supply/exhaust block 10 will be described. As illustrated in Figs. 2 to 6, the first air supply/exhaust block 10 is selectively switchable between an external mode of supplying the externally introduced pilot air to the first and second selector valve blocks 60A and 60B and an internal mode of supplying, as pilot air, a portion of the air introduced from an air supply port 12, to the first and second selector valve blocks 60A and 60B. The first air supply/exhaust block 10 includes a first body 11 that is a body of the first air supply/exhaust block 10, a first selection member 33 mounted on the first body 11 in the external mode, and a second selection member 42 mounted on the first body 11 in the internal mode.

The first body 11 is formed into a rectangular parallelepiped shape extending in a front-rear direction. A front end portion of the first body 11 has the air supply port 12 and an air exhaust port 13 that are vertically spaced from each other. In addition, a pair of side surfaces 14 and 15 facing away from each other in the width direction have first and second air supply openings 16 and 17 for discharging air, first and second air exhaust openings 18 and 19 for exhausting air, first and second pilot supply openings 20 and 21 for supplying pilot air, and first and second pilot air exhaust openings 22 and 23 for exhausting pilot air, respectively.

In addition, an upper portion of the first body 11 includes a recessed part 24, and an above-described attachment surface 25 with a planar shape is formed in a bottom portion of the recessed part 24. Thus, the external mode is established by mounting the first selection member 33 on the attachment surface 25, and the internal mode is established by mounting the second selection member 42 on the attachment surface 25.

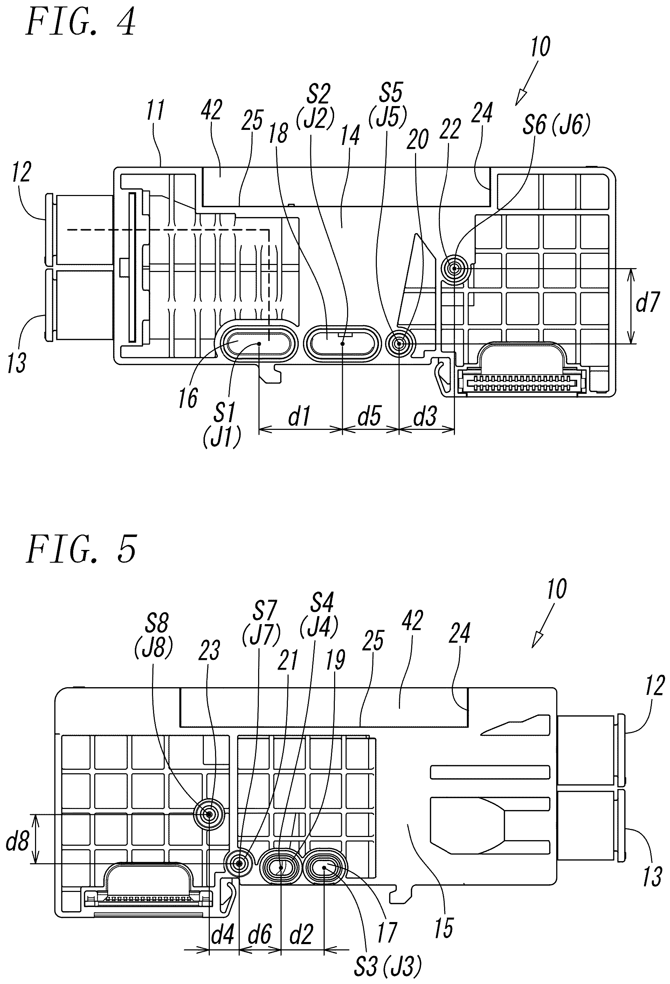

The first air supply opening 16 and the first air exhaust opening 18 that are opened to the side surface 14 on the first end 2 side are opened in a front side bottom portion of the side surface 14. In the front-rear direction, the first air supply opening 16 is disposed horizontally forward of the first air exhaust opening 18 while spaced therefrom by a distance d1 (refer to Fig. 4). In addition, the second air supply opening 17 and the second air exhaust opening 19 that are opened to the side surface 15 on the second end 3 side are opened in a bottom portion, at the center in the front-rear direction, of the side surface 15. In the front-rear direction, the second air supply opening 17 is disposed horizontally forward of the second air exhaust opening 19 while spaced therefrom by a distance d2 (d1 > d2) (refer to Fig. 5). In addition, the first air supply opening 16 and the first air exhaust opening 18 are formed into elongated hole shapes extending in the front-rear direction and opened to the same size, and the second air supply opening 17 and the second air exhaust opening 19 are also formed into elongated hole shapes extending in the front-rear direction and opened to the same size. The opening area of the first air supply opening 16 is larger than the opening area of the second air supply opening 17, and the opening area of the first air exhaust opening 18 is larger than the opening area of the second air exhaust opening 19.

In addition, the first and second air supply openings 16 and 17 have respective centers S1 and S3 disposed on axial lines J1 and J3 that extend along the width direction and are mutually different. In addition, the first and second air exhaust openings 18 and 19 have respective centers S2 and S4 also disposed on axial lines J2 and J4 that extend along the width direction and are mutually different.

In the present embodiment, the axial lines J1 to J4 extend parallel to one another in the width direction without crossing one another. As described above, relative to the second air supply opening 17 and the second air exhaust opening 19, the first air supply opening 16 and the first air exhaust opening 18 are opened with a different opening area and disposed at a different position in the front-rear direction. The first air supply opening 16 and the first air exhaust opening 18 are opened in recessed shapes relative to the side surface 14 on the first end 2 side, and the second air supply opening 17 and the second air exhaust opening 19 are opened at distal ends of protruding parts 17a and 19a having cylindrical shapes protruding from the side surface 15 on the second end 3 side.

In addition, in the front-rear direction, the first pilot supply opening 20 opened to the side surface 14 on the first end 2 side is disposed horizontally rearward of the first air exhaust opening 18 while spaced therefrom by a distance d5. In addition, relative to the first pilot supply opening 20, the first pilot air exhaust opening 22 is disposed upward while spaced therefrom by a distance d7 and rearward while spaced therefrom by a distance d3 (refer to Fig. 4). On the other hand, in the front-rear direction, the second pilot supply opening 21 opened to the side surface 15 on the second end 3 side is disposed horizontally rearward of the second air exhaust opening 19 while spaced therefrom by a distance d6. In addition, relative to the second pilot supply opening 21, the second pilot air exhaust opening 23 is disposed upward while spaced therefrom by a distance d8 (d8 < d7) and rearward while spaced therefrom by a distance d4 (d4 < d3) (refer to Fig. 5).

In addition, the first pilot supply opening 20 and the first pilot air exhaust opening 22 are formed into circular shapes opened to the same size. In addition, the second pilot supply opening 21 and the second pilot air exhaust opening 23 are also formed into circular shapes opened to the same size. The first and second pilot supply openings 20 and 21 have respective centers S5 and S7 disposed on axial lines J5 and J7 that extend along the width direction and are mutually different. In addition, the first and second pilot air exhaust openings 22 and 23 have respective centers S6 and S8 also disposed on axial lines J6 and J8 that extend along the width direction and are mutually different. In the present embodiment, the axial lines J5 to J8 extend parallel to one another in the width direction.

That is, the first pilot supply opening 20 and the first pilot air exhaust opening 22 are disposed at positions different from the positions of the second pilot supply opening 21 and the second pilot air exhaust opening 23 in an up-down direction and in the front-rear direction. Note that the openings 20 and 22 opened to the side surface 14 on the first end 2 side in the width direction are opened, in recessed shapes, to the side surface 14, and the openings 21 and 23 opened to the side surface 15 on the second end 3 side in the width direction are opened at distal ends of protruding parts 21a and 23a having cylindrical shapes protruding from the side surface 15.

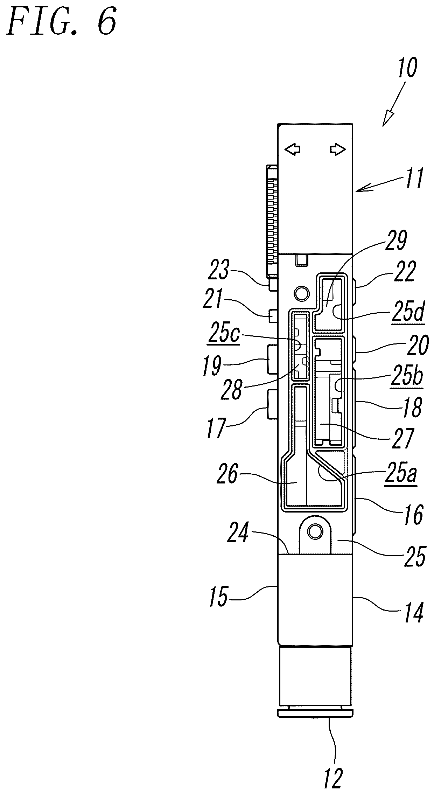

The recessed part 24 formed in the upper portion of the first body 11, in a middle portion of an upper surface of the first body 11 in the front-rear direction, extends in the front-rear direction and is opened at both sides in the width direction. The attachment surface 25 formed in a bottom surface of the recessed part 24 extends into a rectangular shape in plan view. As illustrated in Fig. 6, the attachment surface 25 has an air supply communication port 25a communicated with the air supply port 12, an air exhaust communication port 25b communicated with the first and second air exhaust openings 18 and 19, a pilot supply communication port 25c communicated with the first and second pilot supply openings 20 and 21, and a pilot air exhaust communication port 25d communicated with the first and second pilot air exhaust openings 22 and 23.

The air supply communication port 25a is communicated with the first air supply opening 16, the second air supply opening 17, and the air supply port 12 through an air supply communication flow passage 26. In the present embodiment, in the air supply communication flow passage 26, one end portion thereof is communicated with the first and second air supply openings 16 and 17, and the other end portion is communicated with the air supply communication port 25a and the air supply port 12.

The air exhaust communication port 25b is communicated with the first air exhaust opening 18, the second air exhaust opening 19, and the air exhaust port 13 through an air exhaust communication flow passage 27. In the present embodiment, in the air exhaust communication flow passage 27, one end portion thereof is communicated with the first and second air exhaust openings 18 and 19, and the other end portion is communicated with the air exhaust communication port 25b and the air exhaust port 13.

The pilot supply communication port 25c is communicated with the first and second pilot supply openings 20 and 21 through a pilot supply flow passage 28. In the present embodiment, in the pilot supply flow passage 28, one end portion thereof is communicated with the first and second pilot supply openings 20 and 21, and the other end portion is communicated with the pilot supply communication port 25c.

The pilot air exhaust communication port 25d is communicated with the first and second pilot air exhaust openings 22 and 23 through a pilot air exhaust flow passage 29. In the present embodiment, in the pilot air exhaust flow passage 29, one end portion thereof is communicated with the first and second pilot air exhaust openings 22 and 23, and the other end portion is communicated with the pilot air exhaust communication port 25d.

The first selection member 33 or the second selection member 42 is selectively attached to the attachment surface 25 having the communication ports 25a to 25d.

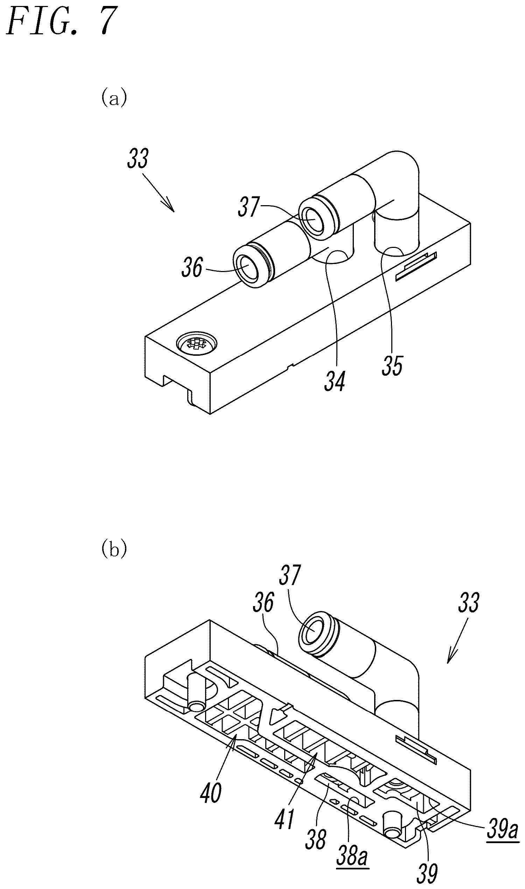

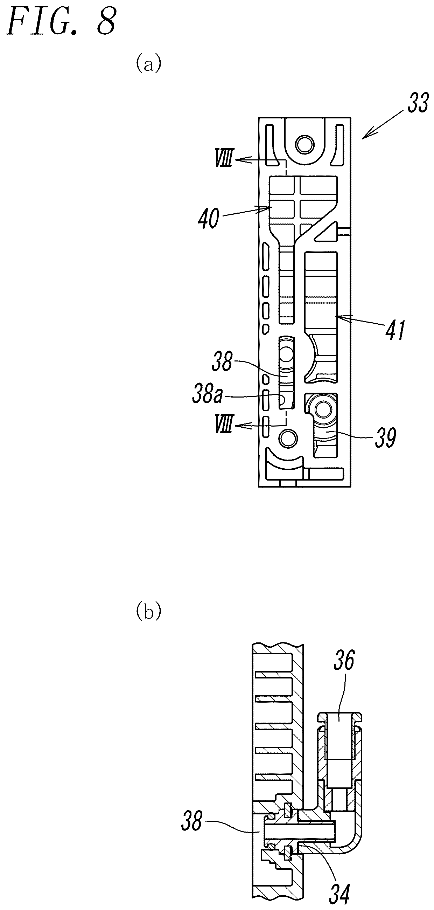

As illustrated in Figs. 2, 6, 7, and 8, the first selection member 33 is formed into a rectangular parallelepiped shape, and an upper surface thereof has a pilot supply inlet 34 for introducing pilot air and a pilot exhaust outlet 35 for exhausting the pilot air exhausted from the first selector valve block 60A. In the present embodiment, a pilot supply port 36 is inserted into and attached to the pilot supply inlet 34, and a pilot exhaust port 37 is inserted into and attached to the pilot exhaust outlet 35. The pilot supply inlet 34 is formed in a rear region, of the first selection member 33, on the second end 3 side in the width direction, and the pilot exhaust outlet 35 is formed rearward of the pilot supply inlet 34 and on the first end 2 side in the width direction.

A first supply groove part 38 is formed inside of the first selection member 33 on the undersurface side. The first supply groove part 38, while communicated with the pilot supply inlet 34 at an upper end, extends downward, and a lower end is opened to the undersurface of the first selection member 33. An opening portion 38a of the lower end of the first supply groove part 38 extends in the front-rear direction and is formed into a rectangular shape that is substantially the same size as the pilot supply communication port 25c.

In addition, a first exhaust groove part 39 is formed inside of the first selection member 33 on the undersurface side. In the first exhaust groove part 39, an upper end is communicated with the pilot exhaust outlet 35, and a lower end is opened to the undersurface of the first selection member 33. An opening portion 39a opened at the lower end of the first exhaust groove part 39 extends in the front-rear direction and is formed into a rectangular shape that is substantially the same size as the pilot air exhaust communication port 25d.

In addition, the undersurface of the first selection member 33 includes an air supply closure part 40 and an air exhaust closure part 41 that close the first air supply opening 16 and the first air exhaust opening 18 that are formed in the attachment surface 25. The closure parts 40 and 41 surround the openings 16 and 18 to close the communication ports 25a and 25b. Note that, when the first selection member 33 is mounted on the attachment surface 25, the communication ports 25a, 25b, 25c, and 25d become hermetically sealed from the outside. Note that the first selection member 33 is detachably attached to the attachment surface 25 by using fastening members (screws) inserted into both sides, in the front-rear direction, of the first selection member 33.

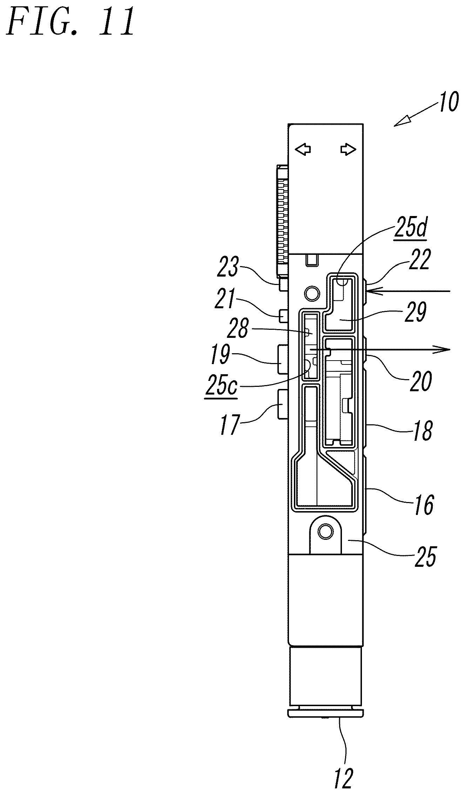

With the first selection member 33 attached to the attachment surface 25 of the first air supply/exhaust block 10, when pilot air is introduced into the pilot supply port 36, as illustrated in Figs. 2 and 11, the pilot air is discharged from the first and second pilot supply openings 20 and 21 through the first supply groove part 38, the pilot supply communication port 25c, and the pilot supply flow passage 28. In addition, when pilot air is introduced into the first pilot air exhaust opening 22, the pilot air is exhausted from the pilot exhaust port 37 through the pilot air exhaust flow passage 29, the pilot air exhaust communication port 25d, and the first exhaust groove part 39. Note that, in the present embodiment, the second selector valve block 60B is coupled to the side surface 15 of the first air supply/exhaust block 10 on the second end 3 side and is supplied with air from the second air supply/exhaust block 6. Thus, in the first air supply/exhaust block 10, air is discharged only from the first pilot supply opening 20.

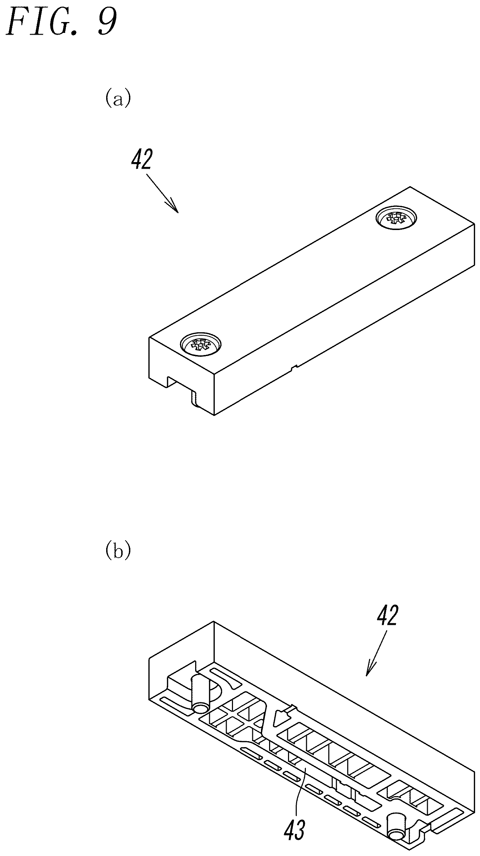

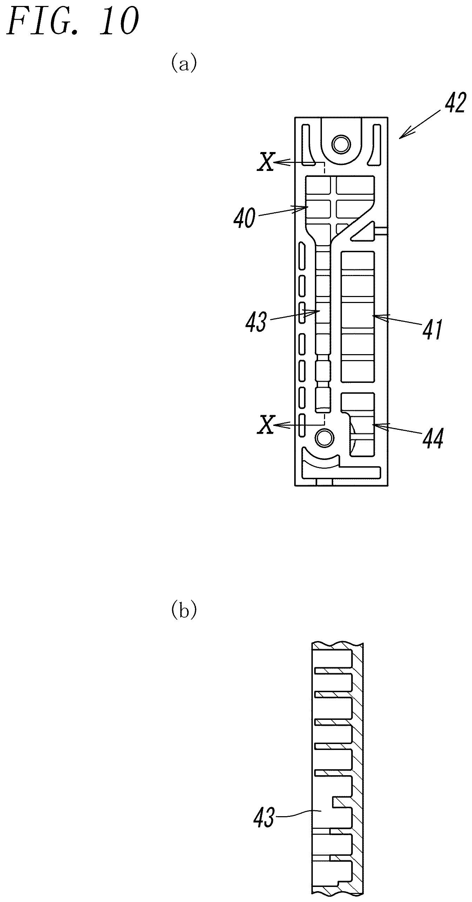

As illustrated in Figs. 3, 9, and 10, the second selection member 42 is formed into a rectangular parallelepiped shape and has, in a rear region of a lower surface thereof on the second end 3 side in the width direction, a second groove part 43 extending linearly in the front-rear direction and whose lower side is open. The second groove part 43 extends over the first air supply opening 16 and the first pilot supply opening 20 and allows the openings 16 and 20 to communicate with each other.

In addition, in an undersurface of the second selection member 42, as with the first selection member 33, an air supply closure part 40 and an air exhaust closure part 41 are formed, and a pilot air exhaust closure part (closure part) 44 configured to close the pilot air exhaust communication port 25d is further formed. The closure parts 40, 41, and 44 surround and close the communication ports 25a, 25b, and 25d. Note that, when the second selection member 42 is mounted on the attachment surface 25, the communication ports 25a, 25b, 25c, and 25d become hermetically sealed from the outside. The second selection member 42 is detachably attached to the attachment surface 25 of the first air supply/exhaust block 10 by using fastening members (screws) inserted into both sides, in the front-rear direction, of the second selection member 42.

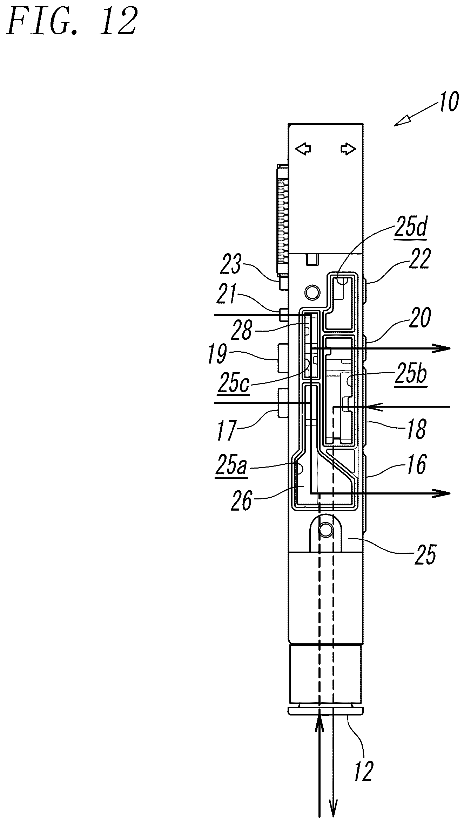

With the second selection member 42 attached to the attachment surface 25, when air is introduced into the air supply port 12, as illustrated in Figs. 3 and 12, the air is discharged mainly from the first air supply opening 16 through the air supply communication flow passage 26. In addition, a portion of the air is discharged, as pilot air, mainly from the first pilot supply opening 20 through the air supply communication flow passage 26, the second groove part 43, and the pilot supply flow passage 28. That is, since the second selector valve block 60B that is supplied with air from the second air supply/exhaust block 6 is connected to the side surface 15 of the first air supply/exhaust block 10 on the second end 3 side, the air is discharged mainly from the first air supply opening 16 and the first pilot supply opening 20.

As illustrated in Figs. 2 and 3, a lower portion, of the first body 11, rearward of the first and second pilot supply openings 20 and 21 opened in the first body 11 has a mounting hole part 30 passing therethrough in the width direction. A connection substrate part 31 for receiving an electrical signal transmitted from the first end block 90 is attached inside the mounting hole part 30. When the first and second selector valve blocks 60A and 60B are coupled to the side surfaces 14 and 15 of the first air supply/exhaust block 10, respectively, the connection substrate part 31 is electrically connected to connection substrate parts 48 provided for the first and second selector valve blocks 60A and 60B.

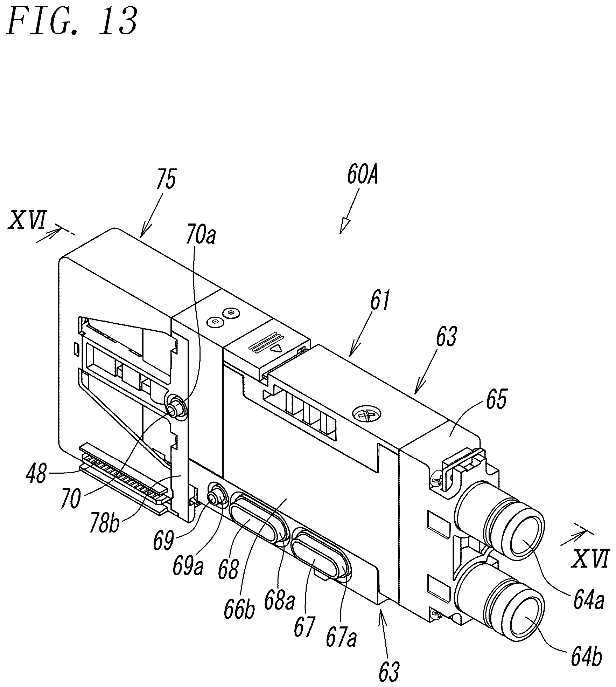

Next, the first selector valve block 60A will be described. As illustrated in Figs. 13 to 16, the first selector valve block 60A includes a main valve part 61 incorporated with valve elements 62a and 62b and a pilot valve part 75 including first and second pilot solenoid valves 76a and 76b. The main valve part 61 includes a main valve body 63 that is a body thereof, and the main valve body 63 is formed into a rectangular parallelepiped shape extending in the front-rear direction. A port block 65 having first and second output ports 64a and 64b is attached to a front end portion of the main valve body 63. The pilot valve part 75 includes a pilot body 77 that is a body thereof, and the pilot body 77 is coupled to a rear end portion of the main valve body 63.

Side surfaces 66a, 66b, 78a, and 78b, a pair of which face away from each other in the width direction, of the main valve body 63 and the pilot body 77, have a first selector valve-air supply opening 67 into which air is supplied, and a first selector valve-air exhaust opening 68 from which air is exhausted, a first selector valve-pilot supply opening 69 into which pilot air is supplied, and a first selector valve-pilot air exhaust opening 70 from which pilot air is exhausted. The openings 67 to 70 are connectable to the first air supply opening 16, the first air exhaust opening 18, the first pilot supply opening 20, and the first pilot air exhaust opening 22 that are opened in a region of the above-described first air supply/exhaust block 10 on the first end 2 side in the width direction.

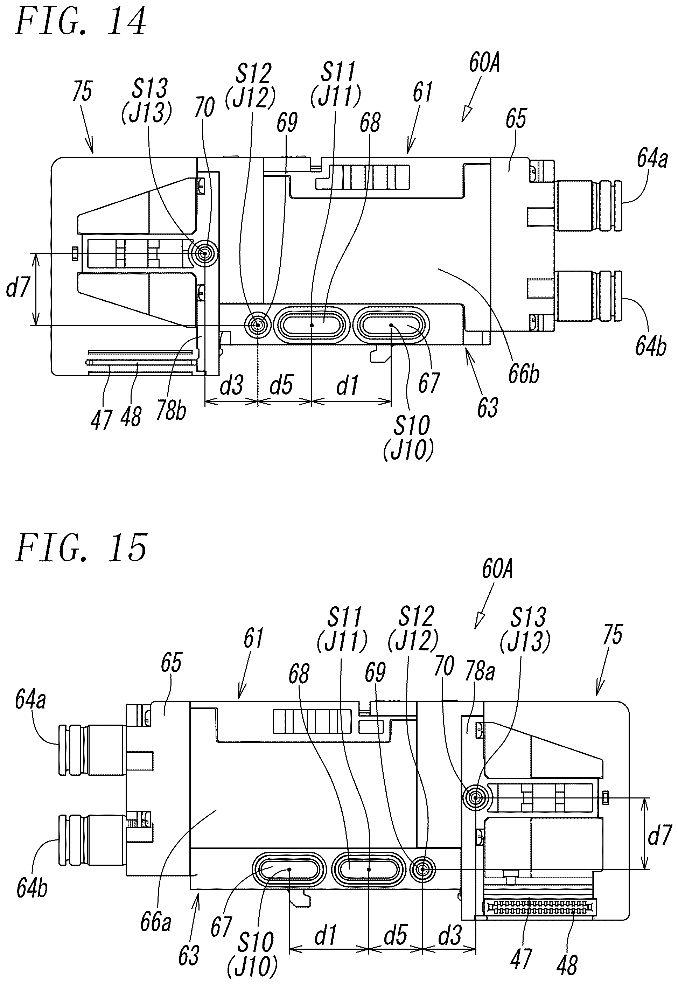

More specifically, as illustrated in Fig. 14, the first selector valve-air supply opening 67 and the first selector valve-air exhaust opening 68 that are opened to the side surface 66b of the first selector valve block 60A on the second end 3 side in the width direction are opened in a front side lower portion of the side surface 66b. In addition, the openings 67 and 68 extend in the front-rear direction and are opened to the same size and formed into substantially the same shape as the first air supply opening 16 and the first air exhaust opening 18 illustrated in Fig. 3. In the front-rear direction, the first selector valve-air supply opening 67 is disposed horizontally forward of the first selector valve-air exhaust opening 68 while spaced therefrom by the distance d1.

In addition, in the front-rear direction, the first selector valve-pilot supply opening 69 opened to the side surface 66b is disposed horizontally rearward of the first selector valve-air exhaust opening 68 while spaced therefrom by the distance d5. Relative to the first selector valve-pilot supply opening 69, the first selector valve-pilot air exhaust opening 70 is disposed upward while spaced therefrom by the distance d7 and rearward while spaced therefrom by the distance d3. In addition, the first selector valve-pilot supply opening 69 and the first selector valve-pilot air exhaust opening 70 are formed into substantially the same circular shape as the first pilot supply opening 20 and the first pilot air exhaust opening 22 illustrated in Fig. 3. In the present embodiment, the openings 67 to 70 are opened at distal ends of protruding parts 67a to 70a having cylindrical shapes protruding from the side surface 66b on the second end 3 side (refer to Fig. 13).

On the other hand, the first selector valve-air supply opening 67, the first selector valve-air exhaust opening 68, the first selector valve-pilot supply opening 69, and the first selector valve-pilot air exhaust opening 70 that are opened to the side surface 66a of the first selector valve block 60A on the first end 2 side in the width direction are opened to the side surface 66b on the second end side in the width direction and formed similarly to the openings 67 to 70. However, the openings 67 to 70 are opened, in recessed shapes, to the side surface 66a.

Centers S10 of the first selector valve-air supply openings 67 opened to the respective side surfaces 66a and 66b on both sides of the first selector valve block 60A in the width direction are disposed on the same axial line J10 extending along the width direction. In addition, centers S11 of the first selector valve-air exhaust openings 68 opened to the respective side surfaces 66a and 66b are disposed on the same axial line J11 extending along the width direction. Moreover, centers S12 of the first selector valve-pilot supply openings 69 opened to the respective side surfaces 66a and 66b are disposed on the same axial line J12 extending along the width direction. In addition, centers S13 of the first selector valve-pilot air exhaust openings 70 opened to the respective side surfaces 66a and 66b are disposed on the same axial line J13 extending along the width direction.

The first selector valve-air supply openings 67 and 67 are communicated with each other through a selector valve-air supply communication flow passage 71 formed inside the main valve body 63. The first selector valve-air exhaust openings 68 and 68 are communicated with each other through a selector valve-air exhaust communication flow passage 72 formed inside the main valve body 63. Moreover, the first selector valve-pilot supply openings 69 and 69 are communicated with each other through a selector valve-pilot supply flow passage 73 formed inside the main valve body 63. The first selector valve-pilot air exhaust openings 70 and 70 are communicated with each other through a selector valve-pilot air exhaust flow passage 74 formed inside the main valve body 63.

Thus, by coupling the side surface 66b of the first selector valve block 60A on the second end 3 side in the width direction to the side surface 14 of the first air supply/exhaust block 10 on the first end 2 side in the width direction illustrated in Fig. 4, the first air supply opening 16, the first air exhaust opening 18, the first pilot supply opening 20, and the first pilot air exhaust opening 22 that are opened to the side surface 14 of the first air supply/exhaust block 10 illustrated in Fig. 4 can be connected to the first selector valve-air supply opening 67, the first selector valve-air exhaust opening 68, the first selector valve-pilot supply opening 69, and the first selector valve-pilot air exhaust opening 70.

Note that the first selector valve-air supply openings 67, the first selector valve-air exhaust openings 68, the first selector valve-pilot supply openings 69, and the first selector valve-pilot air exhaust openings 70 that are opened to the side surfaces 66a and 66b on both sides of the first selector valve block 60A in the width direction are respectively the same in shape and disposition between the side surfaces 66a and 66b. Thus, when abutting on one another continuously in the width direction, the multiple first selector valve blocks 60A are capable of being coupled to one another with the respective openings 67 to 70 communicated with each other.

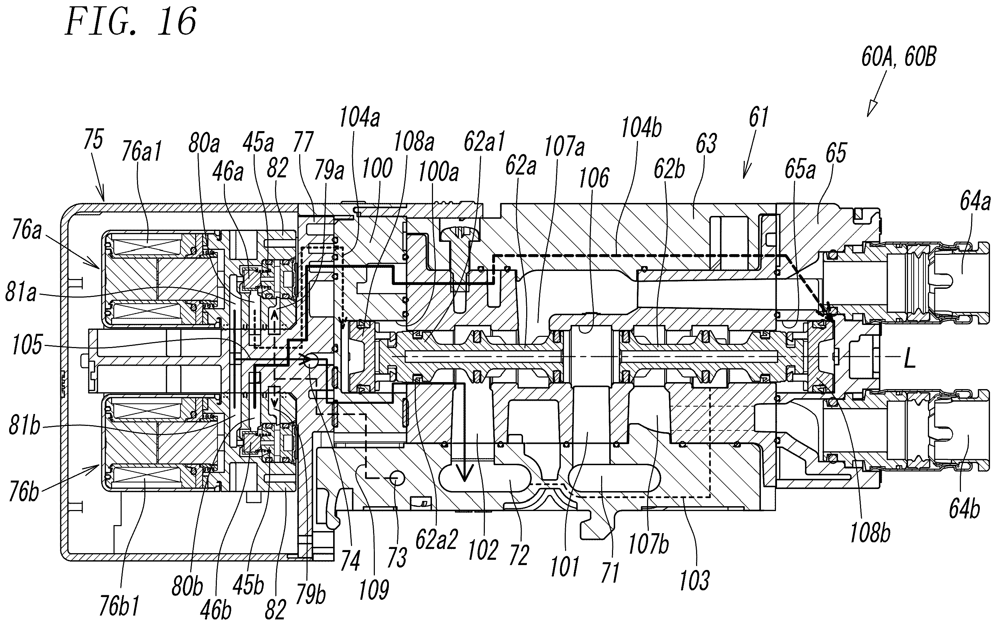

Next, the inner structure of the first selector valve block 60A will be described. As illustrated in Fig. 16, the main valve part 61 of the first selector valve block 60A is a three-port valve and includes the main valve body 63, a piston box 100 attached to a rear end surface of the main valve body 63, and the port block 65 attached to a front end surface of the main valve body 63. The main valve body 63 includes the selector valve-air supply communication flow passage 71 and the selector valve-air exhaust communication flow passage 72 that pass through in the width direction, for making the multiple first selector valve blocks 60A usable by arranging the multiple first selector valve blocks 60A adjacent to one another in the width direction.

In addition, a valve hole 106 passing through along an axial line L extending in the front-rear direction is formed between both end surfaces of the main valve body 63 in the front-rear direction. In the valve hole 106, there are formed a selector valve-air supply flow passage 101 positioned at the center in the axial line L direction, first and second output flow passages 107a and 107b positioned on both sides of the selector valve-air supply flow passage 101, and first and second air exhaust flow passages 102 and 103 positioned on both sides of the first and second output flow passages 107a and 107b and communicated with the selector valve-air exhaust communication flow passage 72.

The valve elements 62a and 62b are slidably inserted, along the axial line L direction, into both sides of the valve hole 106 in the front-rear direction. The valve elements 62a and 62b are configured so as to use the acting force due to the air pressure from the selector valve-air supply flow passage 101 as return force. In addition, first and second pistons 108a and 108b configured to push the valve elements 62a and 62b by receiving action of pilot air pressure are disposed on both sides of the valve hole 106 in the axis L direction.

The first and second output flow passages 107a and 107b are positioned on both upper and lower sides of the valve hole 106. In the first and second output flow passages 107a and 107b, rear ends are opened into the valve hole 106, and front end sides extend forward in the axial line L direction to communicate with the first and second output ports 64a and 64b.

In the piston box 100, a first piston chamber 100a opened forward is formed, and the first piston 108a larger in diameter than the valve element 62a is slidably inserted into the first piston chamber 100a in the axial line L direction. In addition, in the port block 65, a second piston chamber 65a opened rearward is formed, and the second piston 108b larger in diameter than the valve element 62b is slidably inserted into the second piston chamber 65a in the axial line L direction.

The main valve body 63 includes a first pilot supply communication flow passage 104a capable of supplying pilot air into the first piston chamber 100a and a second pilot supply communication flow passage 104b capable of supplying pilot air into the second piston chamber 65a. When pilot air is supplied into the first piston chamber 100a, the acting force due to the pilot air pressure acting on the first piston 108a larger in diameter than the valve element 62a exceeds the acting force of the air flowing from the selector valve-air supply flow passage 101 and acting on the front side end surface of the valve element 62a, and the valve element 62a thus moves forward in the axial line L direction. Thus, the selector valve-air supply flow passage 101 communicates with the first output flow passage 107a, and air is output from the first output port 64a. On the other hand, when pilot air is exhausted from the first piston chamber 100a, the pilot air pressure acting on the first piston 108a is reduced, and the acting force of the air acting on the front side end surface of the valve element 62a exceeds the acting force due to the pilot air pressure acting on the first piston 108a; thus, the valve element 62a returns to the rear side in the axial line L direction. When the first pilot supply communication flow passage 104a communicates with a pilot air exhaust flow passage 105, pilot air is exhausted from the selector valve-pilot air exhaust flow passage 74 or the selector valve-air exhaust communication flow passage 72. Note that the details of such exhaust of pilot air will be described later.

In addition, when pilot air is supplied into the second piston chamber 65a, as with the case where pilot air is supplied into the first piston chamber 100a, the second piston 108b moves rearward, the selector valve-air supply flow passage 101 and the second output flow passage 107b communicate with each other, and air is output from the second output port 64b. On the other hand, when the pilot air in the second piston chamber 65a is exhausted, the valve element 62b returns to the front side in the axial line L direction. When the second pilot supply communication flow passage 104b communicates with the pilot air exhaust flow passage 105, pilot air is exhausted from the selector valve-pilot air exhaust flow passage 74 or the selector valve-air exhaust communication flow passage 72. Note that the details of such exhaust of pilot air will be described later.

The pilot valve part 75 is provided with the first and second pilot solenoid valves 76a and 76b configured to drive the valve elements 62a and 62b. The first and second pilot solenoid valves 76a and 76b include first and second pilot inlet flow passages 79a and 79b, first and second pilot output flow passages 80a and 80b, and first and second pilot air exhaust flow passages 81a and 81b, respectively. The first and second pilot solenoid valves 76a and 76b are configured as three-port solenoid valves configured to allow the first and second pilot output flow passages 80a and 80b to communicate with the first and second pilot inlet flow passages 79a and 79b and with the first and second pilot air exhaust flow passages 81a and 81b, in a selectively switching manner, by exciting the solenoids 76a1 and 76b1 and by releasing the excitation thereof.

The first and second pilot inlet flow passages 79a and 79b are communicated with the selector valve-pilot supply flow passage 73 through a pilot input flow passage 109 formed extending in both the pilot body 77 and the main valve body 63. The first pilot output flow passage 80a is communicated with the first piston chamber 100a through the first pilot supply communication flow passage 104a formed extending in both the pilot body 77 and the piston box 100. The second pilot output flow passage 80b is communicated with the second piston chamber 65a through the second pilot supply communication flow passage 104b formed extending in the pilot body 77 and the piston box 100 and the main valve body 63. The first and second pilot air exhaust flow passages 81a and 81b are communicated with each other through the pilot air exhaust flow passage 105 formed extending in both the pilot body 77 and the piston box 100. The pilot air exhaust flow passage 105 is communicated with the selector valve-pilot air exhaust flow passage 74 on the upstream side of the pilot air exhaust flow passage 105. Note that the details of the selector valve-pilot air exhaust flow passage 74 will be described later.

The first selector valve block 60A in the present embodiment is a selector valve of the internal mode illustrated in Fig. 16. The first selector valve block 60A of the present embodiment is configured so that a portion of the air supplied from the air supply port 12 of the first air supply/exhaust block 10 is supplied as pilot air, and the pilot air that is exhausted from the first selector valve block 60A is exhausted into the selector valve-air exhaust communication flow passage 72.

The pilot air exhaust flow passage 105 extends in both the pilot body 77 and the piston box 100 and further extends to the first air exhaust flow passage 102 through the gap formed between a seal member 62a2 and the valve hole 106. The seal member 62a2 is a lip type seal member opened forward and, while allowing the flow of air from the first piston 108a side to the first air exhaust flow passage 102 side, stops the flow of air from the first air exhaust flow passage 102 side to the first piston 108a side.

The first and second pilot solenoid valves 76a and 76b each include a pilot valve main body 82 on the front side. Inside the pilot valve main bodies 82, there are provided inlet valve elements 45a and 45b and air exhaust valve elements 46a and 46b that are arranged in the front-rear direction and work in a mutually interlocked manner. When the solenoid 76a1 or the solenoid 76b1 is excited, the inlet valve element 45a or the inlet main body 45b is opened, thereby allowing the first pilot inlet flow passage 79a to communicate with the first pilot output flow passage 80a or the second pilot inlet flow passage 79b to communicate with the second pilot output flow passage 80b individually. In addition, when the excitation of the solenoid 76a1 or the solenoid 76b1 is released, the air exhaust valve element 46a or the air exhaust valve element 46b is closed, thereby blocking a flow passage from the first pilot output flow passage 80a or the second pilot output flow passage 80b to the pilot air exhaust flow passage 105. As a result, pilot air is supplied into the first piston chamber 100a or the second piston chamber 65a.

In addition, when the excitation of the solenoid 76a1 or the solenoid 76b1 is released, the inlet valve elements 45a and 45b are closed, and the air exhaust valve elements 46a and 46b are opened. Then, a flow passage from the first pilot output flow passage 80a or the second pilot output flow passage 80b to the first pilot air exhaust flow passage 81a or the second pilot air exhaust flow passage 81b is opened, and the air supplied into the first piston chamber 100a or the second piston chamber 65a is exhausted individually. As a result, the acting force due to the pressure of the pilot air flowing from the selector valve-air supply communication flow passage 71 into the valve hole 106 through the selector valve-air supply flow passage 101 serves as the return force of the valve elements 62a and 62b, and the valve elements 62a and 62b perform return operations.

As illustrated in Figs. 14 and 15, a rear side bottom portion relative to the main valve body 63 of the first selector valve block 60A has a mounting hole part 47 passing through in the width direction, and, inside the mounting hole part 47, the connection substrate part 48 for receiving an electrical signal transmitted from the first end block 90 is attached. The connection substrate part 48 is electrically connected to the solenoids 76a1 and 76b1 of the first and second pilot solenoid valves 76a and 76b. When, relative to the side surfaces 66a and 66b of the first selector valve block 60A, another first selector valve block 60A or the first air supply/exhaust block 10 is coupled, the connection substrate parts 31 and 48 of the blocks 10 and 60A are electrically connected.

The above-described first selector valve block 60A is a selector valve of the internal mode, but the first air supply/exhaust block 10 of the present embodiment is usable for a selector valve of the external mode. The first air supply/exhaust block 10 of the external mode is configured so that a portion of the air introduced from the pilot supply port 36 is supplied as pilot air, and the supplied pilot air is exhausted from the selector valve-pilot air exhaust flow passage 74.

Here, in the pilot air exhaust flow passage 105 in the above-described first selector valve block 60A of internal mode type, a middle portion thereof is communicated with the selector valve-pilot air exhaust flow passage 74, and, further, the lip type seal member 62a2 allows air to flow to the first air exhaust flow passage 102 side. Thus, air is difficult to exhaust from the selector valve-pilot air exhaust flow passage 74.

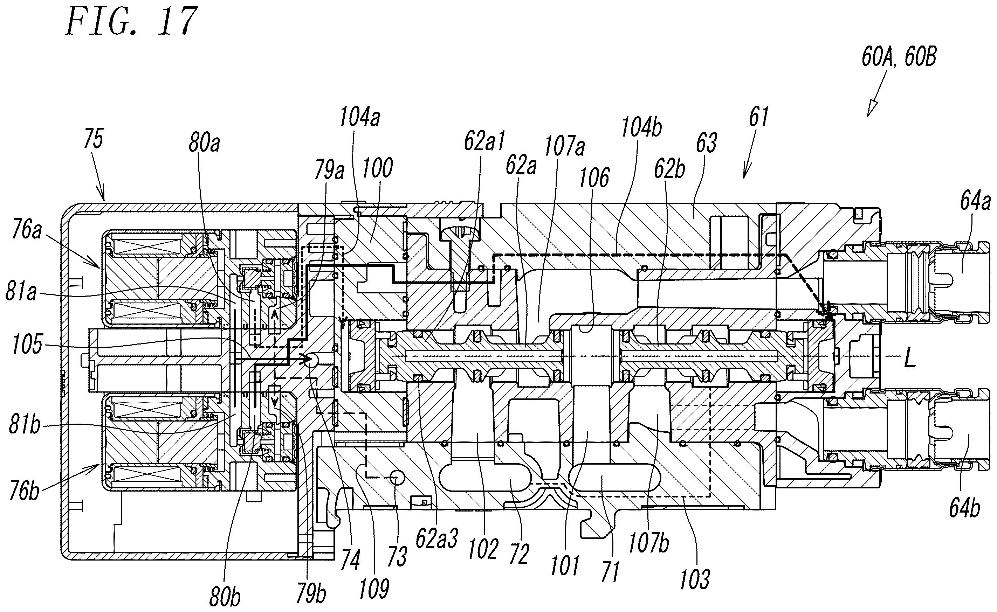

Thus, in the first selector valve block 60A of the external mode, as illustrated in Fig. 17, an O-ring 62a3 is mounted on a land part 62a1 of the valve element 62a instead of the lip type seal member 62a2. The O-ring 62a3 is capable of stopping the flow of air at a contact part between the O-ring 62a3 and the valve hole 106. As a result, in the external mode, the pilot air exhausted from the first and second pilot solenoid valves 76a and 76b is allowed to be exhausted from the selector valve-pilot air exhaust flow passage 74.

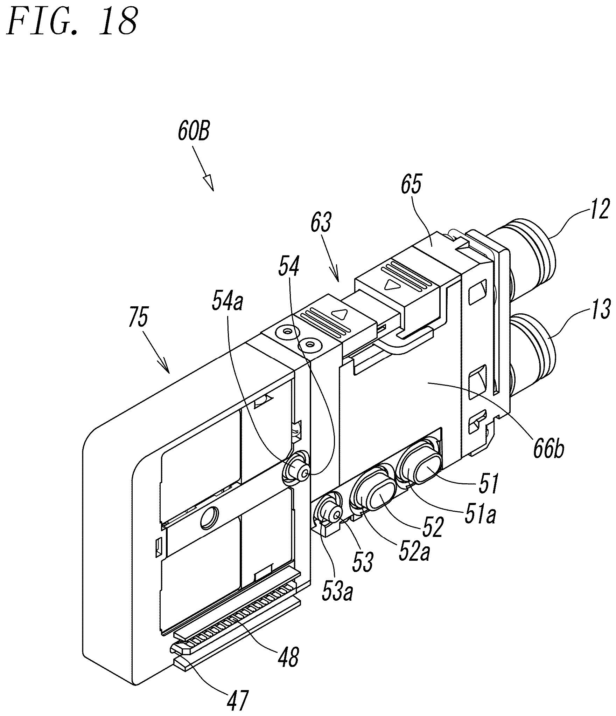

Next, the second selector valve block 60B will be described with reference to Figs. 18 to 20. The second selector valve block 60B is configured similarly to the above-described first selector valve block 60A. Thus, as for the second selector valve block 60B, differences from the first selector valve block 60A will be described, and the description of parts similar to those of the first selector valve block 60A will be omitted by denoting the parts by the same reference signs.

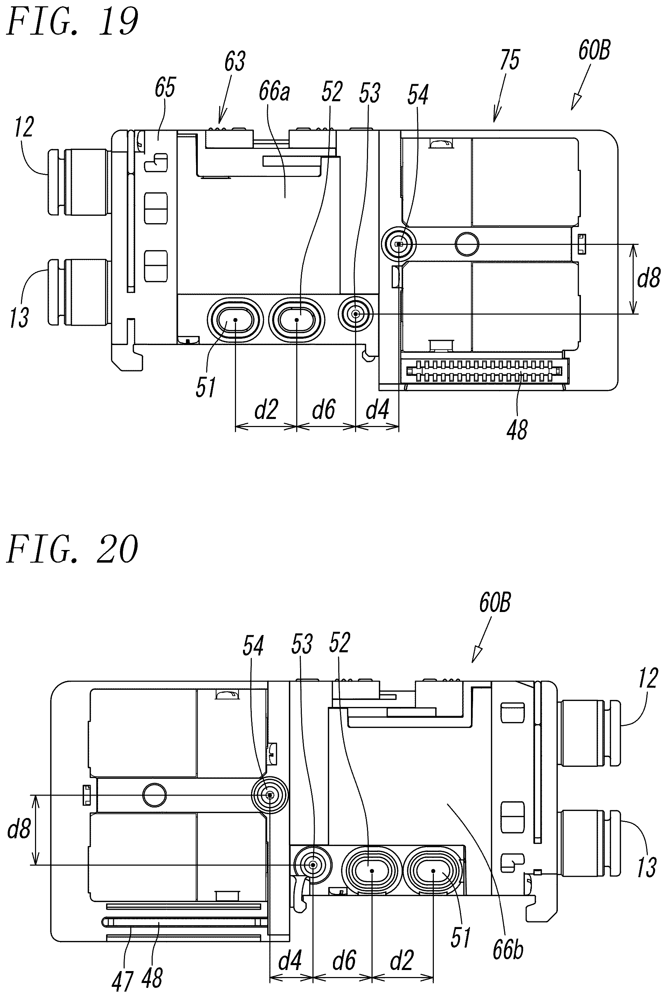

The second selector valve block 60B is formed smaller than the first selector valve block 60A. As illustrated in Figs. 2 and 19, a side surface 66a of the second selector valve block 60B on the first end 2 side in the width direction has a second selector valve-air supply opening 51, a second selector valve-air exhaust opening 52, a second selector valve-pilot supply opening 53, and a second selector valve-pilot air exhaust opening 54 that are connectable to the respective second air supply opening 17, second air exhaust opening 19, second pilot supply opening 21, and second pilot air exhaust opening 23 that are opened to the side surface 15 of the first air supply/exhaust block 10 on the second end 3 side in the width direction. In the present embodiment, the openings 51 to 54 are opened, in recessed shapes, to the side surface 66a.

On the other hand, as illustrated in Figs. 18 and 20, a side surface 66b of the second selector valve block 60B on the second end 3 side in the width direction has a second selector valve-air supply opening 51, a second selector valve-air exhaust opening 52, a second selector valve-pilot supply opening 53, and a second selector valve-pilot air exhaust opening 54 similar to the respective openings opened to the side surface 66a of the second selector valve block 60B on the first end 2 side in the width direction. In the present embodiment, the openings 51 to 54 are opened at distal ends of protruding parts 51a to 54a protruding from the side surface 66b of the second selector valve block 60B.

Next, the second air supply/exhaust block 6 will be outlined. Since the second air supply/exhaust block 6 is configured similarly to the first air supply/exhaust block 10, the description of the same aspect parts as those of the first air supply/exhaust block 10 will be omitted by denoting the parts by the same reference signs, and a principal part will be outlined. As illustrated in Fig. 1, the second air supply/exhaust block 6 differs from the first air supply/exhaust block 10 in that the second air supply/exhaust block 6 allows only the second selector valve block 60B to be coupled thereto and is smaller than the first air supply/exhaust block 10. Side surfaces of the second air supply/exhaust block 6 on both sides in the width direction have openings connectable to the respective second air supply opening 17, second air exhaust opening 19, second pilot supply opening 21, and second pilot air exhaust opening 23 that are opened to the side surface 15, on the second end 3 side, of the first air supply/exhaust block 10 illustrated in Fig. 5.

The air introduced from an air supply port 12 of the second air supply/exhaust block 6 is supplied from the second air supply/exhaust block 6 to multiple second selector valve blocks 60B, and a portion of the air is supplied to pilot valve parts 75 of the multiple second selector valve blocks 60B. The air exhausted from the multiple second selector valve blocks 60B is returned to the second air supply/exhaust block 6 and exhausted from an air exhaust port 13. In addition, the pilot air exhausted from the pilot valve parts 75 of the multiple second selector valve blocks 60B is exhausted from the air exhaust port 13 of the second air supply/exhaust block 6.

Next, the first end block 90 will be outlined. The first end block 90 is capable of transmitting electrical signals to the connection substrate parts 31 and 48 provided for the respective first and second selector valve blocks 60A and 60B and first air supply/exhaust block 10. In addition, a side surface of the first end block 90 on the first end 2 side in the width direction is formed so as to close the multiple openings 17, 19, 21, and 23 that are opened to the side surfaces of the first and second air supply/exhaust blocks 6 and 10 on the second end 3 side in the width direction.

As described above, since, in the first air supply/exhaust block 10 according to the present embodiment, the first air supply opening 16 and the first air exhaust opening 18 that are formed in the side surface 14 of the first air supply/exhaust block 10 on the first end 2 side in the width direction differ in both size and position from the second air supply opening 17 and the second air exhaust opening 19 that are opened to the side surface 15 on the second end 3 side, mixed mounting of the different first and second selector valve blocks 60A and 60B onto the first air supply/exhaust block 10 is possible.

Next, the operation of the selector valve block assembly 1 will be described with reference to Figs. 1 to 3, 12, 16, and 17. First, the internal mode of the selector valve block assembly 1 will be described. In the internal mode, the air supplied into the air supply ports 12 of the air supply/exhaust blocks 6 and 10 is supplied from the first air supply openings 16 to the first and second pilot solenoid valves 76a and 76b of the selector valve blocks 60A and 60B and is selectively output from the first and second output ports 64a and 64b according to the excited states of the pilot solenoid valves 76a and 76b. In addition, the air that is returned from an external device connected to the output ports 64a and 64b is exhausted from the air exhaust ports 13 of the air supply/exhaust blocks 6 and 10 through the selector valve-air exhaust communication flow passages 72 according to the excited states of the pilot solenoid valves 76a and 76b.

Moreover, a portion of the air supplied into the air supply ports 12 is supplied from the first pilot supply openings 20 to the pilot solenoid valves 76a and 76b of the selector valve blocks 60A and 60B. The air supplied to the pilot solenoid valves 76a and 76b then drives the first and second pistons 108a and 108b according to the excited states of the pilot solenoid valves 76a and 76b and is exhausted from the air exhaust ports 13 of the air supply/exhaust blocks 6 and 10 through the pilot air exhaust flow passages 105.

On the other hand, in the external mode, a path allowing the air supplied into the air supply ports 12 of the air supply/exhaust blocks 6 and 10 to be output from the first and second output ports 64a and 64b of the selector valve blocks 60A and 60B and a path allowing the air flowing in from the output ports 64a and 64b to be exhausted from the air exhaust ports 13 of the air supply/exhaust blocks 6 and 10 are similar to those in the above-described internal mode.

Pilot air is introduced from the pilot supply ports 36 of the air supply/exhaust blocks 6 and 10 and supplied from the first pilot supply openings 20 to the pilot solenoid valves 76a and 76b of the selector valve blocks 60A and 60B. According to the excited states of the pilot solenoid valves 76a and 76b, the pilot air supplied to the pilot solenoid valves 76a and 76b then drives the first and second pistons 108a and 108b and is exhausted from the pilot exhaust ports 37 of the air supply/exhaust blocks 6 and 10 through the selector valve-pilot air exhaust flow passages 74.

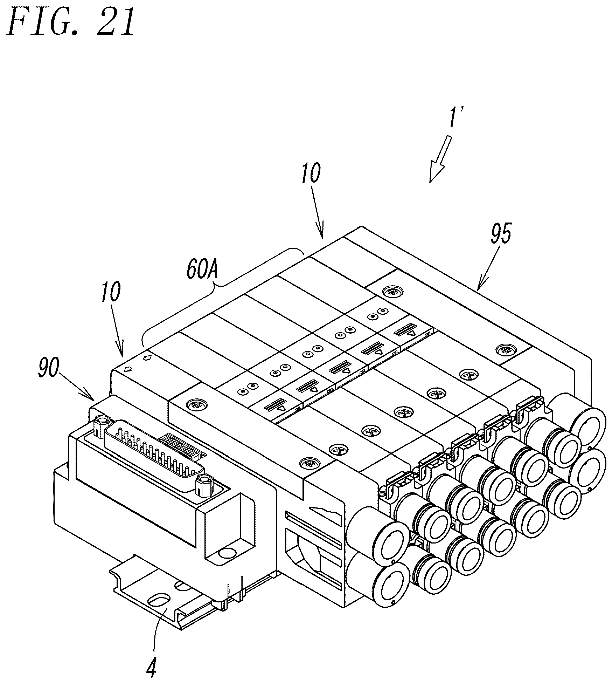

Although the selector valve block assembly 1 in which the first and second selector valve blocks 60A and 60B are coupled to the side surfaces 14 and 15 of the first air supply/exhaust block 10, as illustrated in Fig. 1, is given in the above-described embodiment, this is not the only option. As illustrated in Fig. 21, in a selector valve block assembly 1', to a side surface 14 of a first air supply/exhaust block 10, multiple first selector valve blocks 60A, a first air supply/exhaust block 10, and a second end block 95 may be coupled to one another in order, and, to a side surface 15 of the first air supply/exhaust block 10, a first end block 90 may be coupled. Thus, the first air supply/exhaust block 10 can also be dedicated to the first selector valve block 60A, and the range of options for usability of the first air supply/exhaust block 10 can be further expanded.

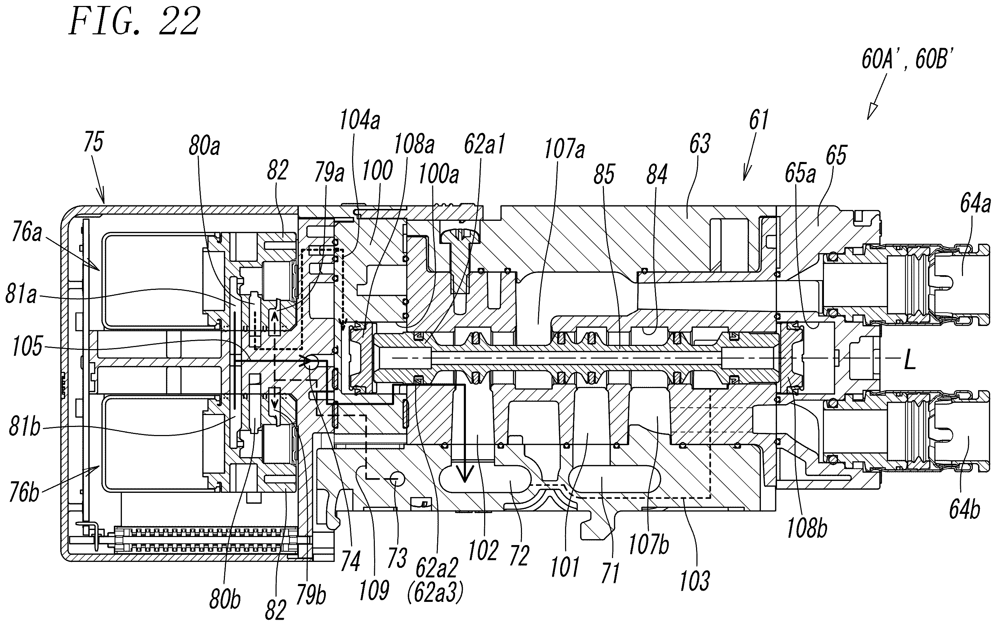

In addition, although the first and second selector valve blocks 60A and 60B in the above-described embodiment are given as dual type selector valve blocks including the valve elements 62a and 62b, the first and second selector valve blocks 60A and 60B may be single type selector valve blocks including one valve element 85 as illustrated in Fig. 22. First and second selector valve blocks 60A' and 60B' including such one valve element 85 have substantially the same structure as the above-described first and second selector valve blocks 60A and 60B. Thus, as for the first and second selector valve blocks 60A' and 60B', the description of the same aspect parts as those of the first and second selector valve blocks 60A and 60B will be omitted by denoting the parts by the same reference signs, and differences will be described.

In the first and second selector valve blocks 60A' and 60B', the one valve element 85 is slidably inserted, in the axial line L direction, into a valve hole 84 provided in a main valve body 63. The valve element 85 is moved forward in the axial line L direction by supplying pilot air into a first piston chamber 100a and by exhausting the pilot air inside a second piston chamber 65a. In addition, the valve element 85 is moved rearward in the axial line L direction by exhausting the pilot air inside the first piston chamber 100a and by supplying pilot air into the second piston chamber 65a. In addition, for a seal member mounted on a land part 62a1, on the rear end side, of the valve element 85, an O-ring 62a3 is mounted in the external mode, and a lip type seal member 62a2 whose front side is open is mounted in the internal mode.

### Reference Signs List

1, 1' selector valve block assembly
2 first end
3 second end
10 first air supply/exhaust block (air supply/exhaust block)
11 first body (body)
12 air supply port
13 air exhaust port
14, 15, 66a, 66b side surface
16 first air supply opening
17 second air supply opening
18 first air exhaust opening
19 second air exhaust opening
20 first pilot supply opening
21 second pilot supply opening
22 first pilot air exhaust opening
23 second pilot air exhaust opening
25 attachment surface
25a air supply communication port
25c pilot supply communication port
25d pilot air exhaust communication port
26 air supply communication flow passage (air supply flow passage)
27 air exhaust communication flow passage (air exhaust flow passage)
28 pilot supply flow passage
29 pilot air exhaust flow passage
33 first selection member
34 pilot supply inlet
35 pilot exhaust outlet
42 second selection member
60A first selector valve block (selector valve block)
60B second selector valve block (selector valve block)
64a first output port (output port)
64b second output port (output port)
71 selector valve-air supply communication flow passage (air supply flow passage)
72 selector valve-air exhaust communication flow passage (air exhaust flow passage)
73 selector valve-pilot supply flow passage
74 selector valve-pilot air exhaust flow passage
S1, S2, S3, S4, S5, S6, S7, S8, S10, S11, S12, S13 center
J1, 12, 13, J4, J5, J6, 17, J8, J10, J11, J12, J13 axial line

## Claims

1. A selector valve block assembly in which multiple selector valve blocks having an output port and an air supply/exhaust block having an air supply port and an air exhaust port are coupled to one another in a row along a width direction with side surfaces abutting on each other, the selector valve block assembly including a first end and a second end at both ends in the width direction, wherein
the air supply/exhaust block includes a body having a first air supply opening for discharging air and a first air exhaust opening for exhausting air in a side surface, on the first end side, of a pair of side surfaces facing away from each other in the width direction, and having a second air supply opening and a second air exhaust opening in a side surface of the pair of the side surfaces on the second end side,
the first air supply opening, the second air supply opening, and the air supply port are communicated with one another through an air supply communication flow passage,
the first air exhaust opening, the second air exhaust opening, and the air exhaust port are communicated with one another through an air exhaust communication flow passage,
the first and second air supply openings have respective centers disposed on axial lines that extend along the width direction and are mutually different,
the first and second air exhaust openings have respective centers disposed on axial lines that extend along the width direction and are mutually different,
the multiple selector valve blocks are constituted by multiple selector valve blocks selected from first and second selector valve blocks including an air supply flow passage and an air exhaust flow passage that pass through between both side surfaces facing away from each other in the width direction, and allowing the air supply flow passage and the air exhaust flow passage to be selectively communicated with the output port,
when the first selector valve block is coupled to the side surface of the air supply/exhaust block on the first end side, the air supply flow passage and the air exhaust flow passage of the first selector valve block are capable of being coupled to the first air supply opening and the first air exhaust opening of the air supply/exhaust block, and,
when the second selector valve block is coupled to the side surface of the air supply/exhaust block on the second end side, the air supply flow passage and the air exhaust flow passage of the second selector valve block are capable of being coupled to the second air supply opening and the second air exhaust opening of the air supply/exhaust block.

2. The selector valve block assembly according to claim 1, wherein
the first air supply opening and the first air exhaust opening of the air supply/exhaust block are spaced from each other by a first distance in the side surface on the first end side,
the second air supply opening and the second air exhaust opening are spaced from each other, in the side surface on the second end side, by a second distance that is different from the first distance,
an opening area of the first air supply opening differs from an opening area of the second air supply opening, and
an opening area of the first air exhaust opening differs from an opening area of the second air exhaust opening.

3. The selector valve block assembly according to claim 1, wherein
the first and second selector valve blocks are pilot type selector valves,
the air supply/exhaust block is selectively switchable between an external mode of supplying externally introduced pilot air to the first and/or second selector valve block and an internal mode of supplying, as pilot air, a portion of air introduced from the air supply port, to the first and/or second selector valve block,
the air supply/exhaust block includes a first selection member mounted on the body in the external mode, a second selection member mounted on the body in the internal mode, and an attachment surface formed in the body and selectively mounted with the selection members,
the pair of the side surfaces of the body have first and second pilot supply openings for supplying pilot air to the first and/or second selector valve block and first and second pilot air exhaust openings for introducing pilot air exhausted from the first and/or second selector valve block,
the attachment surface has an air supply communication port communicated with the air supply port, a pilot supply communication port communicated with the first and second pilot supply openings, and a pilot air exhaust communication port communicated with the first and second pilot air exhaust openings,
the first selection member has a pilot supply inlet for supplying pilot air and a pilot exhaust outlet for exhausting pilot air and is configured so as to allow the pilot supply inlet to communicate with the pilot supply communication port, allow the pilot exhaust outlet to communicate with the pilot air exhaust communication port, and further close the air supply communication port when mounted on the attachment surface,
the second selection member is configured so as to allow the air supply communication port to communicate with the pilot supply communication port and further close the pilot air exhaust communication port when mounted on the attachment surface,
by configuring the first selection member and the second selection member as above, in the external mode, pilot air supplied from the pilot supply inlet is supplied to the first and/or second selector valve block, and pilot air that is exhausted from the selector valve block supplied with the pilot air is exhausted from the pilot exhaust outlet, and,
in the internal mode, pilot air from the air supply port is supplied to the first and/or second selector valve block, and pilot air that is exhausted from the first and/or second selector valve block supplied with the pilot air is exhausted through the air exhaust flow passage of the selector valve block.

4. The selector valve block assembly according to claim 3, wherein
the first and second pilot supply openings have respective centers disposed on axial lines that extend along the width direction and are mutually different,
the first and second pilot air exhaust openings have respective centers disposed on axial lines that extend along the width direction and are mutually different,
the first pilot supply opening and the first pilot air exhaust opening are spaced from each other by a third distance in the side surface on the first end side, and
the second pilot supply opening and the second pilot air exhaust opening are spaced from each other, in the side surface on the second end side, by a fourth distance that is different from the third distance.

5. The selector valve block assembly according to claim 4, wherein
the first and second selector valve blocks each include a selector valve-pilot supply flow passage and a selector valve-pilot air exhaust flow passage that pass through between both the side surfaces facing away from each other in the width direction,
when the first selector valve block is coupled to the side surface of the air supply/exhaust block on the first end side, the selector valve-pilot supply flow passage and the selector valve-pilot air exhaust flow passage of the first selector valve block are coupled to the first pilot supply opening and the first pilot air exhaust opening of the air supply/exhaust block, and,
when the second selector valve block is coupled to the side surface of the air supply/exhaust block on the second end side, the selector valve-pilot supply flow passage and the selector valve-pilot air exhaust flow passage of the second selector valve block are coupled to the second pilot supply opening and the second pilot air exhaust opening of the air supply/exhaust block.

6. The air supply/exhaust block used for the selector valve block assembly according to any one of claims 1 to 5.
